(19) Europäisches Patentamt
European Patent Office
Office européen des brevets

(11) EP 2 069 121 B1

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(21) Anmeldenummer: **07820482.3**

(22) Anmeldetag: **24.09.2007**

(51) Int Cl.:
***B29B 13/08*** (2006.01) ***C08J 3/12*** (2006.01)
***G01F 23/28*** (2006.01) ***G01N 21/00*** (2006.01)
***G01N 22/00*** (2006.01)

(86) Internationale Anmeldenummer:
**PCT/EP2007/060075**

(87) Internationale Veröffentlichungsnummer:
**WO 2008/037674 (03.04.2008 Gazette 2008/14)**

(54) **VERFAHREN ZUR KONTINUIERLICHEN HERSTELLUNG WASSERABSORBIERENDER POLYMERPARTIKEL**

METHOD FOR THE CONTINUOUS PRODUCTION OF WATER-ABSORBENT POLYMER PARTICLES

PROCÉDÉ DESTINÉ À PRODUIRE DE MANIÈRE CONTINUE DES PARTICULES POLYMÈRES ABSORBANT L'EAU

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.09.2006 EP 06121229**

(43) Veröffentlichungstag der Anmeldung:
**17.06.2009 Patentblatt 2009/25**

(73) Patentinhaber: **BASF SE**
**67056 Ludwigshafen (DE)**

(72) Erfinder:
- **STUEVEN, Uwe**
  **65812 Bad Soden (DE)**
- **FUNK, Rüdiger**
  **65527 Niedernhausen (DE)**
- **WEISMANTEL, Matthias**
  **63637 Jossgrund (DE)**
- **MEES, Filip**
  **2280 Grobbendonk (BE)**
- **DEBOEL, Koen**
  **2610 Wilrijk (BE)**

(56) Entgegenhaltungen:
**EP-A- 1 039 289** **WO-A-2006/079631**
**DE-A1- 19 504 544**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur kontinuierlichen Herstellung wasserabsorbierender Polymerpartikel, wobei mindestens ein partikulärer Fördergutmassenstrom mittels eingestrahlter elektromagnetischer Wellen bestimmt wird.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Eigenschaften der wasserabsorbierenden Polymere können über den Vernetzungsgrad eingestellt werden. Mit steigendem Vernetzungsgrad steigt die Gelfestigkeit und sinkt die Zentrifugenretentionskapazität (CRC).

Zur Verbesserung der Anwendungseigenschaften, wie beispielsweise Flüssigkeitsweiterleitung im gequollenen Gelbett (SFC) in der Windel und Absorption unter Druck (AUL), werden wasserabsorbierende Polymerpartikel im allgemeinen nachvernetzt. Dadurch steigt nur der Vernetzungsgrad der Partikeloberfläche, wodurch die Absorption unter Druck (AUL) und die Zentrifugenretentionskapazität (CRC) zumindest teilweise entkoppelt werden können. Diese Nachvernetzung kann in wässriger Gelphase durchgeführt werden. Vorzugsweise werden aber getrocknete, gemahlene und abgesiebte Polymerpartikel (Grundpolymer) an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

EP 1 426 157 A1 beschreibt ein kontinuierliches Verfahren zur Herstellung wasserabsorbierender Polymerpartikel. Die einzelnen Verfahrensschritte sind durch Pufferbehälter entkoppelt. Um eine kontinuierliche Dosierung in die Nachvernetzung zu gewährleisten, wird die Verwendung von zwei Vorlagen vorgeschlagen. Der Fördergutmassenstrom in die Nachvernetzung wird über die Bestimmung von Füllstandsänderungen in den Vorlagen ermittelt.

WO 2005/122075 A1 offenbart ein kontinuierliches Verfahren zur Herstellung wasserabsorbierender Polymerpartikel, wobei das Verfahren über ein künstliches neuronales Netzwerk gesteuert wird. In dem Anwendungsbeispiel wird die Abhängigkeit der Zentrifugenretentionskapazität (CRC) vom Vernetzergehalt der Monomerlösung zur Regelung der Zentrifugenretentionskapazität (CRC) genutzt.

WO 96/24838 A1 beschreibt ein optisches Verfahren zur Bestimmung eines Fördergutmassenstromes, insbesondere zur Regelung der Feuerung eines Kessels mit Kohlestaub in Kohlekraftwerken.

DE 199 11 654 C1 offenbart eine Einrichtung zur Bestimmung von Geschwindigkeit und Größe von Partikeln.

Aufgabe der vorliegenden Erfindung war die Bereitstellung eines verbesserten Verfahrens zur kontinuierlichen Herstellung wasserabsorbierender Polymerpartikel. Insbesondere soll sich das Verfahren durch eine hohe Prozeßstabilität auszeichnen. Weiterhin sollen Prozeßstörungen schnell detektiert werden.

Eine weitere Aufgabe der vorliegenden Erfindung war ein Verfahren zur kontinuierlichen Herstellung wasserabsorbierender Polymerpartikel, das gegenüber dem Stand der Technik mit weniger Pufferbehältern auskommt.

Gelöst wurde die Aufgabe durch ein Verfahren gemäβ Anspruch 1 zur kontinuierlichen Herstellung wasserabsorbierender Polymerpartikel, wobei mindestens ein partikulärer Fördergutmassenstrom bestimmt wird, dadurch gekennzeichnet, dass elektromagnetische Wellen in einen mit einer Geschwindigkeit von mindestens 0,1 m/s strömenden Fördergutmassenstrom eingestrahlt werden.

Die wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 60 g/g, wobei die Zentrifugenretentionskapazität (CRC) gemäß der von der EDANA (European Disposables and Nonwovens Association) empfohlenen Testmethode Nr. 441.2-02 "Centrifuge retention capacity" bestimmt wird.

Der partikuläre Fördergutmassenstrom, der gemäß dem erfindungsgemäßen Verfahren bestimmt wird, kann Partikelgrößen aufweisen, die von der Partikelgröße des Zielproduktes abweichen. Es können beispielsweise Fördergutmassenströme bestimmt werden, die aus Teilchen mit einem Durchmesser von weniger als 150 μm oder aus Teilchen mit einem Durchmesser von über 850 μm bestehen. Derartige Partikel werden üblicherweise im Verfahren über entsprechende Klassierschritte abgetrennt und vorzugsweise an anderer Stelle in das Verfahren zurückgeführt. Es können aber auch Fördergutmassenströme bestimmt werden, die aus anderen Partikeln bestehen als wasserabsorbierenden Polymeren, beispielsweise pyrogene Kieselsäure mit Primärteilchen mit einem mittleren Durchmesser von ca. 10 nm.

Die Bestimmung des Fördergutmassenstromes bedeutet, dass die mit dem Fördergutmassenstrom pro Zeiteinheit transportierte Masse ermittelt wird.

Die Wellenlänge der elektromagnetischen Strahlung unterliegt keiner Beschränkung. Vorteilhaft können aber Laser-Dioden als Strahlenquelle eingesetzt werden. Die Wellenlänge der durch die Laser-Dioden emittierten Strahlung beträgt vorzugsweise von 0,5 bis 50 μm (6 bis 600 THz). Es ist aber auch möglich Mikrowellen als elektromagnetische

Strahlung zu verwenden, wobei die Wellenlänge vorzugsweise von 1 bis 10 mm (30 bis 300 GHz) beträgt.

Der Fördergutmassenstrom kann beispielsweise bestimmt werden, indem die eingestrahlten elektromagnetischen Wellen durch die Partikel des Fördergutmassenstromes gebeugt werden. Über einen Photodetektor kann anhand der Beugung die Partikelgröße und die Partikelgeschwindigkeit ermittelt werden, wie beispielsweise in DE 199 11 654 C1 beschrieben. Hierzu werden vorzugsweise Laser-Dioden als Strahlenquelle verwendet. Derartige Bestimmungen können beispielsweise mit dem Meßgerät Parsum® IPP 50 (Fa. Malvern Instruments GmbH, Herrenberg, DE) durchgeführt werden. Aus Partikelgröße und Partikelgeschwindigkeit kann der Fördergutmassenstrom berechnet werden.

Weiterhin kann der Fördergutmassenstrom bestimmt werden, indem die eingestrahlten elektromagnetischen Wellen von den Partikeln des Fördergutmassenstromes reflektiert werden. Anschließend werden die reflektierten elektromagnetischen Wellen hinsichtlich ihrer Frequenz und Amplitude ausgewertet, wie beispielsweise in WO 96/24838 A1 beschrieben. Hierzu werden vorzugsweise Mikrowellen verwendet. Derartige Bestimmungen können beispielsweise mit dem Meßgerät SolidFlow (Fa. SWR engineering Messtechnik GmbH, Schliengen, DE) durchgeführt werden.

Bei Rohrdurchmessern von mehr als 20 cm werden vorteilhaft 2 bzw. 3 Sensoren verwendet, wobei die Sensoren 90° bzw. 120° zueinander angeordnet sein sollten.

Die Sensoren werden vor Inbetriebnahme kalibriert, wobei vorzugsweise mindestens drei Fördergutmassenströme eingestellt werden um nichtlineares Verhalten zu erkennen.

Die Geschwindigkeit des Fördergutmassenstromes während der Einstrahlung beträgt vorzugsweise mindestens 1 m/s, bevorzugt mindestens 5 m/s, besonders bevorzugt mindestens 10 m/s, ganz besonders bevorzugt mindestens 12 m/s. Geschwindigkeiten von mehr als 40 m/s sind aufgrund der damit verbundenen erhöhten mechanischen Belastung weniger vorteilhaft.

Der Fördergutmassenstrom wird üblicherweise in Rohren mit einem kreisförmigen Querschnitt gefördert, vorzugsweise wird rostfreier Stahl verwendet. Der Fördergutmassenstrom kann pneumatisch und/oder gravimetrisch gefördert werden.

Der Fördergutmassenstrom enthält zumindest teilweise wasserabsorbierende Polymerpartikel. Der Wassergehalt der geförderten wasserabsorbierenden Polymerpartikel beträgt vorzugsweise 0,1 bis 10 Gew.-%, besonders bevorzugt 0,5 bis 8 Gew.-%, ganz besonders bevorzugt 1 bis 5 Gew.-%, wobei der Wassergehalt gemäß der von der EDANA (European Disposables and Nonwovens Association) empfohlenen Testmethode Nr. 430.2-02 "Moisture content" bestimmt wird.

Der Fördergutmassenstrom wird üblicherweise kontinuierlich bestimmt. Dies bedeutet, dass jede mit dem Fördergutmassenstrom pro Zeiteinheit geförderte Masse ermittelt wird, ausgenommen hiervon sind außerplanmäßige Störungen.

Die optimale Gasanfangsgeschwindigkeit bei der pneumatischen Förderung hängt vom Durchmesser der Förderleitung ab. Diese Abhängigkeit wird am besten mit der Froude-Zahl beschrieben:

$$Fr = \frac{v}{\sqrt{D \times g}}$$

Fr Froude-Zahl
v Gasgeschwindigkeit
D Innendurchmesser der Transportleitung
g Erdbeschleunigung

Die Froude-Zahl bei der erfindungsgemäßen pneumatischen Förderung beträgt vorzugsweise von 10 bis 40, besonders bevorzugt von 11 bis 30, ganz besonders bevorzugt von 12 bis 20.

Bei zu niedrigen Fördergeschwindigkeiten wird die pneumatische Förderung instabil und höhere Fördergeschwindigkeiten erhöhen den unerwünschten Abrieb infolge steigender mechanische Belastung.

Die Fördergutbeladung der pneumatischen Förderung beträgt vorzugsweise von 0,5 bis 20 kg/kg, besonders bevorzugt von 1 bis 10 kg/kg, ganz besonders bevorzugt von 2 bis 6 kg/kg, wobei die Fördergutbeladung der Quotient aus Fördergutmassenstrom und Gasmassenstrom ist.

Grundsätzlich erhöht sich mit steigender Fördergutbeladung auch die optimale Gasanfangsgeschwindigkeit.

Der Durchmesser der Rohrleitung, in der die pneumatische Förderung durchgeführt wird, beträgt vorzugsweise von 3 bis 30 cm, besonders bevorzugt von 4 bis 25 cm, ganz besonders bevorzugt von 5 bis 20 cm. Zu niedrige Rohrdurchmesser führen zu einer höheren mechanischen Belastung durch die pneumatische Förderung und begünstigen damit den unerwünschten Abrieb. Zu große Rohrdurchmesser ermöglichen ein ebenso unerwünschtes Absetzen der wasserabsorbierenden Polymerpartikel in der Förderleitung.

Das erfindungsgemäße Verfahren ermöglicht eine hohe Prozeßstabilität bei der Herstellung wasserabsorbierender Polymere und die schnelle Detektion von Prozeßstörungen.

Schlagartige Änderungen sind oft ein Hinweis auf Prozeßstörungen. Beispielsweise können die bei den verwendeten Klassierverfahren verwendeten Siebmaschienen überwacht werden. Ein steiler Anstieg eines Fördergutmassenstromes zeigt dann einen Siebbruch an. Das schnelle Erkennen der Prozeßstörung minimiert die Menge an nicht spezifikationsgrechtem Produkt.

Weiterhin kann bei den Klassierverfahren infolge von Verstopfungen und/oder Siebüberlastungen zu einer schleichenden Verschiebung der Anteile der einzelnen Siebfraktionen kommen. Diese Störungen führen zu einer verminderten Trennschärfe der Klassierung und können durch zeitnahe Bestimmung der Fördergutmassenströme gemäß dem erfindungsgemäßen Verfahren frühzeitig erkannt werden.

Die Bestimmung des Fördergutmassenstromes kann auch zur Anpassung von Sollwerten in Reglern verwendet werden. Beispiele hierfür sind die Regelung des Gasmassenstromes bei der pneumatischen Förderung, die Regelung der Heiztemperatur bei der Nachtrocknung und die Regelung der Vernetzermenge bei der Polymerisation bei gleichzeitiger Rückführung von Unterkorn (Feinkorn). Die Beispiele werden im Folgenden erläutert:
Wasserabsorbierende Polymerpartikel werden vorzugsweise mittels pneumatischer Fördersysteme transportiert, wobei grundsätzlich drei verschiedene Förderarten unterscheiden lassen.

Bei Flugförderung und Strömförderung im Bereich hoher Gasgeschwindigkeiten gelten annähernd die Gesetze des frei angeströmten Einzelkorns. Es ist die klassische Art der pneumatischen Förderung. Es treten keinerlei Produktablagerungen auf. Es liegt eine im wesentlichen gleichmäßige Fördergutverteilung im Rohr vor.

Sinkt die Gasgeschwindigkeit, dann kommt man in den Bereich der Strähnenförderung, wo das Fördergut vor allem in der unteren Rohrhälfte strömt. In der oberen Rohrhälfte liegt Flugförderung vor.

Bei kleinen Gasgeschwindigkeiten erfolgt die Förderung äußerst schonend als Dichtstromförderung (Pfropfenförderung, Impulsförderung) mit hohem Druckverlust.

Hohe Fördergeschwindigkeiten erhöhen die mechanische Belastung der wasserabsorbierenden Polymerpartikel und führen zu unerwünschtem Abrieb. Daher sind niedrige Fördergeschwindigkeiten bevorzugt.

Zu niedrige Fördergeschwindigkeiten im Bereich der Strähnenförderung sind aber problematisch, da in dem instabilen Bereich zwischen der Dichtstromförderung und der Strähnenförderung keine stabile Förderung möglich ist. Vielmehr können die dabei auftretenden mechanischen Belastungen zu schweren Schäden am Fördersystem, bis zum Herausreißen der Förderleitungen aus den Halterungen, führen.

Zu niedrige Fördergeschwindigkeiten können beispielsweise auftreten, wenn der Fördergutmassenstrom infolge ungleichmäßiger Beladung des pneumatischen Fördersystems steigt und der Gasmassenstrom nicht ausreichend angehoben wird.

Das erfindungsgemäße Verfahren ermöglicht nun die zeitnahe Bestimmung des wirklichen Fördergutmassenstromes bereits im vorderen Bereich der Förderleitung. Dies ermöglicht eine schnelle Anpassung des Gasmassenstromes. Hierdurch ist ein geringerer Sicherheitsabstand zum instabilen Bereich möglich und die pneumatische Förderung kann bei niedrigeren Fördergeschwindigkeiten betrieben werden. Der unerwünschte Abrieb kann minimiert werden.

Das erfindungsgemäße Verfahren kann auch zur Regelung der Heiztemperatur bei der Nachtrocknung verwendet werden.

Üblicherweise wird das bei der Polymerisation anfallende Hydrogel auf einem Bandtrockner getrocknet. Nach der Trocknung werden unvollständig getrocknete Anteile abgetrennt, wie beispielsweise in EP 948 997 A2 beschrieben. Die unvollständig getrockneten Anteile können in einem separaten Trockner nachgetrocknet werden.

Die Menge unvollständig getrockneter Anteile unterliegt deutlichen Schwankungen. Daher ist es vorteilhaft diese Mengenschwankungen über einen Vorlagebehälter abzufangen.

Mit der zeitnahen Bestimmung des Fördergutmassenstromes gemäß dem erfindungsgemäßen Verfahrens kann die Trocknerleistung der Nachtrocknung optimal angepasst werden, ein Vorlagebehälter ist nicht mehr erforderlich.

Das erfindungsgemäße Verfahren kann aber auch zur Regelung der Vernetzermenge bei der Polymerisation bei gleichzeitiger Rückführung von Unterkorn (Feinkorn) verwendet werden.

Bei der Herstellung wasserabsorbierender-Polymerpartikel wird sowohl nach der Mahlung als auch nach der Nachvernetzung klassiert. Hierbei wird Unterkorn (Feinkorn) abgetrennt. Aus ökonomischen Gründen ist es sinnvoll dieses Unterkorn (Feinkorn) zurückzuführen. Vorzugsweise werden sowohl das nach der Mahlung als auch das nach der Nachvernetzung anfallende Unterkorn (Feinkorn) in einem gemeinsamen Silo zwischengelagert und in die Polymerisation zurückgeführt.

Es hat sich nun herausgestellt, dass rückgeführtes nachvemetztes Unterkorn die Zentrifugenretentionskapazität (CRC) des Endproduktes senkt. Daher ist es notwendig die Vernetzermenge bei der Polymerisation entsprechend der Menge an rückgeführtem nachvernetztem Unterkorn (Feinkorn) anzupassen. Hierfür ist das erfindungsgemäße Verfahren besonders gut geeignet. Durch die zeitnahe Bestimmung der rückgeführten Fördergutmassenströme an Unterkorn (Feinkorn) kann unmittelbar der Anteil an nachvernetztem Unterkorn (Feinkorn) in der rückgeführten Mischung berechnet und die Vernetzermenge bei der Polymerisation angepasst werden.

Vorteilhaft wird diese Messeinheit gleichzeitig zur bereits oben beschriebenen Siebüberwachung verwendet,

wodurch die Anzahl der Messeinrichtungen im Verfahren niedrig gehalten werden kann.

Die im erfindungsgemäßen Verfahren einzusetzenden wasserabsorbierenden Polymerpartikel können durch Polymerisation von Monomerlösungen, enthaltend mindestens ein ethylenisch ungesättigtes Monomer a), wahlweise mindestens einen Vernetzer b), mindestens einen Initiator c) und Wasser d), hergestellt werden.

Die Monomeren a) sind vorzugsweise wasserlöslich, d. h. die Löslichkeit in Wasser bei 23 °C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden

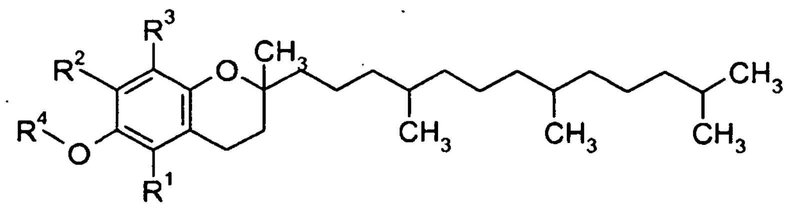

wobei $R^1$ Wasserstoff oder Methyl, $R^2$ Wasserstoff oder Methyl, $R^3$ Wasserstoff oder Methyl und $R^4$ Wasserstoff oder ein Säurerest mit 1 bis 20 Kohlenstoffatomen bedeutet.

Bevorzugte Reste für $R^4$ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit $R^1$ = $R^2$ = $R^3$ = Methyl, insbesondere racemisches alpha-Tocopherol. $R^1$ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth) acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist.

Besonders vorteilhafte Vernetzer b) sind jedoch Di- und Triacrylate des 3- bis 20-fach ethoxylierten Glyzerins,

des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins.

Die Menge an Vernetzer b) beträgt vorzugsweise 0,01 bis 5 Gew.-%, besonders bevorzugt 0,05 bis 2 Gew.-%, ganz besonders bevorzugt 0,1 bis 1 Gew.-%, jeweils bezogen auf die Monomerlösung.

Als Initiatoren c) können sämtliche unter den Polymerisationsbedingungen radikalbildende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0.001 bis 5 Gew.-%, vorzugsweise 0,01 bis 1 Gew.-%, bezogen auf die Monomeren a).

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Polymers sowie weitere geeignete hydrophile ethylenisch ungesättigte Monomere a) werden in DE 199 41 423 A1, EP 686 650 A1, WO 2001/45758 A1 und WO 2003/104300 A1 beschrieben.

Geeignete Reaktoren sind Knetreaktoren oder Bandreaktoren. Im Kneter wird das bei der Polymerisation einer wässrigen Monomerlösung entstehende Polymergel durch beispielsweise gegenläufige Rührwellen kontinuierlich zerkleinert, wie in WO 20001/38402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Fleischwolf, Extruder oder Kneter.

Vorteilhaft wird das Hydrogel nach dem Verlassen des Polymerisationsreaktors noch bei höherer Temperatur, vorzugsweise mindestens 50°C, besonders bevorzugt mindestes 70 °C, ganz besonders bevorzugt mindestens 80°C, sowie vorzugsweise weniger als 100°C, gelagert, beispielsweise in isolierten Behältern. Durch die Lagerung, üblicherweise 2 bis 12 Stunden, wird der Monomerumsatz weiter erhöht.

Bei höheren Monomerumsätzen im Polymerisationsreaktor kann die Lagerung auch deutlich verkürzt bzw. auf eine Lagerung verzichtet werden.

Die Säuregruppen der erhaltenen Hydrogele sind üblicherweise teilweise neutralisiert, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkälimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23 °C vorliegen. In diesem Fall ist eine Dosierung als Stückgut oder Schmelze bei erhöhter Temperatur möglich.

Es ist aber auch möglich die Neutralisation nach der Polymerisation auf der Stufe des Hydrogels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Wird das Hydrogel zumindest teilweise nach der Polymerisation neutralisiert, so wird das Hydrogel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Hydrogel wird dann vorzugsweise mit einem Bandtrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß um so einfacher und das Produkt um so weißer, wenn der Feststoffgehalt des Gels möglichst hoch ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern.

Das getrocknete Hydrogel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die mittlere Partikelgröße der als Produktfraktion abgetrennten Polymerpartikel beträgt vorzugsweise mindestens 200 μm, besonders bevorzugt von 250 bis 600 μm, ganz besonders von 300 bis 500 μm. Die mittlere Partikelgröße der Produktfraktion kann mittels der von der EDANA (European Disposables and Nonwovens Association) empfohlenen Testmethode Nr. 420.2-02 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Die Polymerpartikel können zur weiteren Verbesserung der Eigenschaften nachvernetzt werden. Geeignete Nachvernetzer sind Verbindungen, die Gruppen enthalten, die mit den mindestens zwei Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

In einer bevorzugten Ausführungsform der vorliegenden Erfindung werden zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 0,5 Gew.-%, vorzugsweise 0,005 bis 0,2 Gew.-%, besonders bevorzugt 0,02 bis 0,1 Gew.-%, jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvemetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und

Schugi-Mischer.

Die thermische Trocknung wird vorzugsweise in Kontakttrocknem, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250 °C, bevorzugt 120 bis 220 °C, und besonders bevorzugt 130 bis 210 °C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Anschließend kann das nachvernetzte Polymer erneut klassiert werden.

## Patentansprüche

1. Verfahren zur kontinuierlichen Herstellung wasserabsorbierender Polymerpartikel, wobei für mindestens einen partikuläreren Fördergutmassenstrom, der zumindest teilweise wasserabsorbierende Polymerpartikel enthält, die pro Zeiteinheit transportierte Masse ermittelt wird, **dadurch gekennzeichnet, dass** elektromagnetische Wellen in den mit einer Geschwindigkeit von mindestens 0,1 m/s strömenden Fördergutmassenstrom eingestrahlt werden und die elektromagnetischen Wellen zur Ermittlung der pro Zeiteinheit transportierten Masse in den Fördergutmassenstrom eingestrahlt werden.

2. Verfahren gemäß Anspruch 1, **dadurch gekennzeichnet, dass** der Fördergutmassenstrom in einem Rohr mit kreisförmigen Querschnitt gefördert wird.

3. Verfahren gemäß Anspruch 1 oder 2, **dadurch gekennzeichnet, dass** der Fördergutmassenstrom pneumatisch gefördert wird.

4. Verfahren gemäß Anspruch 3, **dadurch gekennzeichnet, dass** die Fördergutbeladung bei der pneumatischen Förderung von 0,5 bis 20 kg/kg beträgt, wobei die Fördergutbeladung der Quotient aus Fördergutmassenstrom und Gasmassenstrom ist.

5. Verfahren gemäß eine der Ansprüche 1 bis 4, **dadurch gekennzeichnet, dass** die geförderten wasserabsorbierenden Polymerpartikel einen Wassergehalt von weniger als 10 Gew.-% aufweisen.

6. Verfahren gemäß einem der Ansprüche 1 bis 5, **dadurch gekennzeichnet, dass** die pro Zeiteinheit transportierte Masse des Fördergutmassenstroms kontinuierlich ermittelt wird.

7. Verfahren gemäß einem der Ansprüche 1 bis 6, **dadurch gekennzeichnet, dass** die elektromagnetischen Wellen mittels eine Dioden-Lasers eingestrahlt werden.

8. Verfahren gemäß einem der Ansprüche 1 bis 6, **dadurch gekennzeichnet, dass** die eingestrahlten elektromagnetischen Wellen Mikrowellen sind.

9. Verfahren gemäß einem der Ansprüche 1 bis 8, **dadurch gekennzeichnet, dass** die Ermittlung der pro Zeiteinheit transportierte Masse des Fördergutmassenstroms zur Detektion von Prozeßstörungen verwendet wird.

10. Verfahren gemäß einem der Ansprüche 1 bis 8, **dadurch gekennzeichnet, dass** die Ermittlung der pro Zeiteinheit transportierte Masse des Fördergutmassenstroms zur Anpassung von Sollwerten in Reglern verwendet wird.

11. Verfahren gemäß einem der Ansprüche 1 bis 10, **dadurch gekennzeichnet, dass** die wasserabsorbierenden Polymerpartikel zu mindestens 50 mol-% zumindest teilweise neutralisierter polymerisierter Acrylsäure enthalten.

12. Verfahren gemäß einem der Ansprüche 1 bis 11, **dadurch gekennzeichnet, dass** die wasserabsorbierenden Polymerpartikel eine Zentrifugenretentionskapazität von mindestens 15 g/g aufweisen.

## Claims

1. A process for continuously preparing water-absorbing polymer beads by determining the mass transported per unit time for at least one particulate delivery material mass flow which at least partly comprises water-absorbing polymer beads, which comprises radiating electromagnetic waves into the delivery material mass flow flowing with a speed of at least 0.1 m/s and radiating the electromagnetic waves into the delivery material mass flow to determine the mass transported per unit time.

2. The process according to claim 1, wherein the delivery material mass flow is delivered in a tube with cylindrical cross section.

3. The process according to claim 1 or 2, wherein the delivery material mass flow is delivered pneumatically.

4. The process according to claim 3, wherein the delivery material loading in the course of pneumatic delivery is from 0.5 to 20 kg/kg, the delivery material loading being the quotient of delivery material mass flow and gas mass flow.

5. The process according to any of claims 1 to 4, wherein the delivered water-absorbing polymer beads have a water content of less than 10% by weight.

6. The process according to any of claims 1 to 5, wherein the mass transported per unit time of the delivery material mass flow is determined continuously.

7. The process according to any of claims 1 to 6, wherein the electromagnetic waves are radiated in by means of a diode laser.

8. The process according to any of claims 1 to 6, wherein the incident electromagnetic waves are microwaves.

9. The process according to any of claims 1 to 8, wherein the determination of the mass transported per unit time of the delivery material mass flow is used for the detection of process disruptions.

10. The process according to any of claims 1 to 8, wherein the determination of the mass transported per unit time of the delivery material mass flow is used for adjustment of target values in closed-loop controllers.

11. The process according to any of claims 1 to 10, wherein the water-absorbing polymer beads comprise at least partly neutralized polymerized acrylic acid to an extent of at least 50 mol%.

12. The process according to any of claims 1 to 11, wherein the water-absorbing polymer beads have a centrifuge retention capacity of at least 15 g/g.

## Revendications

1. Procédé pour la production continue de particules de polymère absorbant l'eau, dans lequel on détermine la masse transportée par unité de temps pour au moins un flux massique de matière particulaire transportée, qui contient des particules de polymère au moins en partie absorbant l'eau, **caractérisé en ce qu'**on fait passer des ondes électromagnétiques dans le flux massique de matière transportée se déplaçant à une vitesse d'au moins 0,1 m/s et on fait passer les ondes électromagnétiques dans le flux massique de matière transportée, pour la détermination de la masse transportée par unité de temps.

2. Procédé selon la revendication 1, **caractérisé en ce que** le flux massique de matière transportée est acheminé dans un tube à section transversale circulaire.

3. Procédé selon la revendication 1 ou 2, **caractérisé en ce que** le flux massique de matière transportée est acheminé par transport pneumatique.

4. Procédé selon la revendication 3, **caractérisé en ce que** le chargement de matière transportée dans le transport pneumatique est de 0,5 à 20 kg/kg, le chargement de matière transportée étant le quotient du flux massique de matière transportée et du flux massique de gaz.

5. Procédé selon l'une quelconque des revendications 1 à 4, **caractérisé en ce que** les particules transportées de polymère absorbant l'eau présentent une teneur en eau de moins de 10 % en poids.

6. Procédé selon l'une quelconque des revendications 1 à 5, **caractérisé en ce que** la masse transportée par unité de temps du flux massique de matière transportée est déterminée en continu.

7. Procédé selon l'une quelconque des revendications 1 à 6, **caractérisé en ce que** les ondes électromagnétiques sont émises par un laser à diode.

8. Procédé selon l'une quelconque des revendications 1 à 6, **caractérisé en ce que** les ondes électromagnétiques émises sont des micro-ondes.

9. Procédé selon l'une quelconque des revendications 1 à 8, **caractérisé en ce que** la détermination de la masse transportée par unité de temps du flux massique de matière transportée est utilisée pour la détection d'incidents de processus.

10. Procédé selon l'une quelconque des revendications 1 à 8, **caractérisé en ce que** la détermination de la masse transportée par unité de temps du flux massique de matière transportée est utilisée pour l'adaptation de valeurs prescrites dans des régulateurs.

11. Procédé selon l'une quelconque des revendications 1 à 10, **caractérisé en ce que** les particules de polymère absorbant l'eau contiennent à raison d'au moins 50 % en moles de l'acide acrylique polymérisé au moins partiellement neutralisé.

12. Procédé selon l'une quelconque des revendications 1 à 11, **caractérisé en ce que** les particules de polymère absorbant l'eau présentent une capacité de rétention centrifuge d'au moins 15 g/g.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1426157 A1
- WO 2005122075 A1
- WO 9624838 A1
- DE 19911654 C1
- EP 948997 A2
- EP 530438 A1
- EP 547847 A1
- EP 559476 A1
- EP 632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 200232962 A2
- EP 343427 A2
- DE 19941423 A1
- EP 686650 A1
- WO 200145758 A1
- WO 2000138402 A1
- DE 3825366 A1
- US 6241928 B
- EP 83022 A2
- EP 543303 A1
- EP 937736 A2
- DE 3314019 A1
- DE 3523617 A1
- EP 450922 A2
- DE 10204938 A1
- US 6239230 B
- DE 4020780 C1
- DE 19807502 A1
- DE 19807992 C1
- DE 19854573 A1
- DE 19854574 A1
- DE 10204937 A1
- DE 10334584 A1
- EP 1199327 A2
- WO 200331482 A1
- DE 3713601 A1


### In der Beschreibung aufgeführte Nicht-Patentliteratur


- **F.L. Buchholz ; A.T. Graham.** Modern Superabsorbent Polymer Technology. Wiley-VCH, 1998, 71-103